# EUROPEAN PATENT APPLICATION

(11) **EP 2 774 805 A1**
(43) Date of publication of application: **10.09.2014**
(21) Application number: 12844720.8
(22) Date of filing: 30.10.2012
(51) Int. Cl.: B60N 2/44, A47C 7/62

(54) **SEAT OCCUPANCY SENSOR**

(30) Priority: 04.11.2011 JP 2011242565
(71) Applicant: Aisin Seiki Kabushiki Kaisha, Kariya-shi, Aichi 448-8650 (JP)
(72) Inventor: KITO Kosuke, Kariya-shi, Aichi-ken, 448-8650 (JP); TAKUMA Setsu, Kariya-shi, Aichi-ken, 448-8650 (JP); YANAI Keiichi, Kariya-shi, Aichi-ken, 448-8650 (JP); MIZOKAWA Yoshihiro, Kariya-shi, Aichi-ken, 448-0027 (JP); KONDO Hiromi, Kariya-shi, Aichi-ken, 448-0027 (JP)
(74) Representative: TBK
(86) International application number: PCT/JP2012/077991
(87) International publication number: WO 2013/065669

(57) **Abstract**

It is an object of the invention to provide a seat occupancy sensor which is assembled into the vehicle seat cushion by connecting the connector portion and the detecting portion including the pressure sensitive switch by wiring via the shortest route to prevent the film from breakage or becoming an easily dis-connectible state.

The conducting portion includes an inserting portion to be inserted into a through-hole provided in the recessed groove and penetrating through the pad member to the backside thereof, a first bending portion bent in a direction intersecting the recessed groove to be in contact with the seating side outer surface, a second bending portion bent in a direction opposite to the first bending portion across the recessed groove to be in contact with the seating side outer surface. The external output portion is provided at the tip end portion of the inserting portion and the detecting portion includes a first detecting portion connecting with the first bending portion and a second detecting portion connected to the second bending portion.

## Description

### TECHNICAL FIELD

This invention relates to a seat occupancy sensor provided in a vehicle seat for detecting a seating load of an occupant seated on the vehicle seat.

### BACKGROUND OF THE TECHNOLOGY

Conventionally, in order to improve the performance of the safety devices, such as for example, seat belts or air bags equipped in the vehicle, such safety devices are controlled by detecting a seating state of an occupant of the vehicle seat. However, the seat is occupied not only by a human but also by a baggage or the like other than human and it would be difficult to accurately judge whether the seat is actually occupied by a human or a baggage by distinguishing the two. This judgment is very important for correctly operating the safety devices.

A thin membrane switch having flexibility is considered to be an appropriate means for detecting the seating state of the occupant of the seat. A seat sensor using one of such switches is disclosed in a Japanese Patent Document 1. The seat sensor disclosed therein is formed by a linearly formed first film, a second film having the same shape with the first film and disposed facing to the first film, a pair of pressure sensitive switches (formed by "contacting/separating portion" and "contacted/separated portion") each being oppositely arranged with a distance separated from each other and electrically connected by contacting operation upon detecting a load applied thereon, an energizing electrode as an energizing portion disposed between the first and the second films for energizing the pressure sensitive switches and a connector connected to each one end of the first and the second films and energized to the pressure sensitive switches through the energizing electrode. The seat sensor is arranged on a seat surface so that the sensor is directed in an inclined direction relative to the vehicle front/rearward direction and the vehicle right/left direction. According to this structure, when an occupant of the vehicle seat is seated with a correct posture, the two pressure sensitive switches are positioned at a portion (hip point) to be in contact with the hip portion of the occupant.

Further, another patent document 2 discloses a linear seat occupancy sensor, in which a tail portion (inserting portion) and a connector portion (external output portion) are disposed in the back side of a pad member of a seat cushion by inserting the two portions into the back side of the pad member from a through-hole provided at the seat cushion.

### DOCUMENT LIST OF STATE OF ART

### PATENT DOCUMENT

Patent Document 1: JP2008-157914 A
Patent Document 2: JP2010-137804 A

### DISCLOSURE OF INVENTION

### PROBLEMS TO BE SOLVED

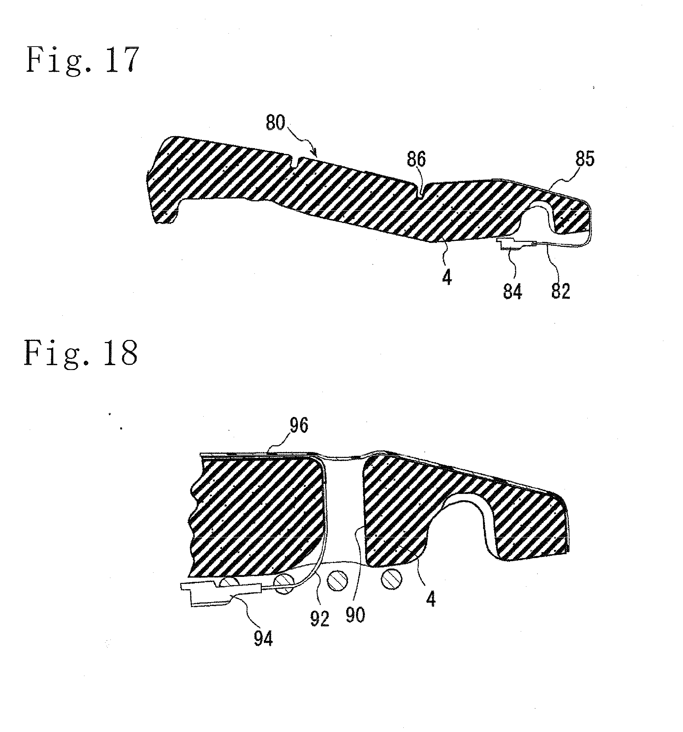

However, in a seat cushion design which has a line (recessed groove) arranged between the two pressure sensitive switches or in the vicinity thereof and extending in a vehicle width direction, the seat occupancy sensor has to be arranged to fit in the groove to correspond the shape thereof with the shape of the groove (See Fig. 17 of the attached drawings), or in a case where the seat occupancy sensor is arranged along the straight line, in the case of such structure, as shown in the patent document 1, the seat occupancy sensor is provided with an inserting portion 82 and a connector portion 84 in the back side of the pad member 4 over through the rear side or the transverse side of the seat cushion 80 (See Fig. 17) or as shown in the patent document 2, a through-hole is provided in the seat cushion, through which the inserting portion and the connector portion (external output portion) are inserted and arranged in the back side of the pad member. According to these structures, however, the distance between the detecting portion, where a pressure sensitive switch is provided and the connector portion becomes too long to wire the conducting portion 85 with the shortest route. Further, since the seat occupancy sensor is provided along in the recessed groove 86, the stress applied on the film which forms the conducting portion 85 is concentrated mostly on the area in the groove 86, which may lead to a possible breakage of the film upon the seat is occupied by an occupant.

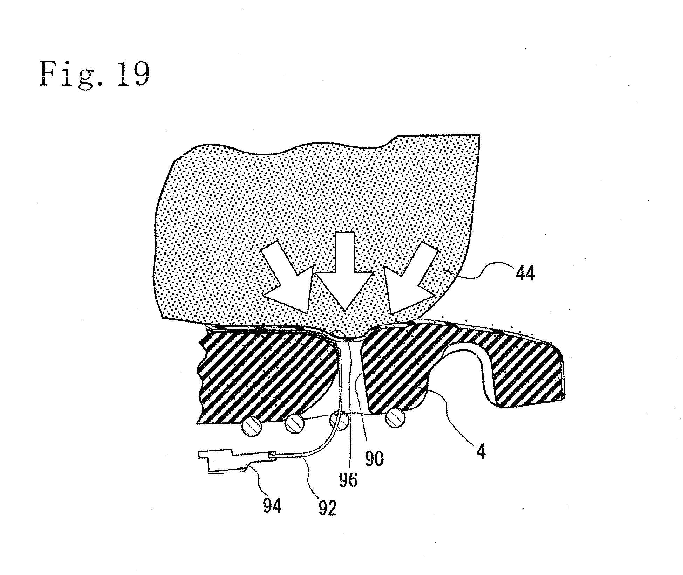

According to the patent document 2, as shown in Fig. 18, a through-hole 90 is punched out at the hip point of the seat cushion for inserting the connector portion 94 of a membrane switch 92. However, as shown in Fig. 19, when an occupant is seated on the seat, the stress concentration is generated at the peripheral portion of the through-hole 90 due to the weight of the hip 44 of the occupant and the peripheral portion of the through-hole 90 is greatly compressed downwardly and deformed which leads to decrease of the reaction force to be generated at the detecting portion 96. This may interfere with correct load detection by the detecting portion 96 of the pressure sensitive sensor arranged around the periphery of the through-hole 90.

Accordingly, this invention was made considering the above conventional drawbacks and it pertains to a seat occupancy sensor provided in a vehicle seat cushion, which can correctly detect the occupant seating state by wiring the connector portion and the detecting portion including the pressure sensitive switch with the shortest route as possible and at the same time which can prevent occurrence of wire dis-connectable state or a film breakable state under an occupant of the vehicle being seated.

### MEANS FOR SOLVING THE PROBLEMS

In order to solve the above problems, the feature of the invention according to claim 1, is characterized in that the flexible film shaped seat occupancy sensor includes a plurality of detecting portions for detecting a load information of a pad member by being in contact with a seating side outer surface of the pad member, an external output portion for outputting a load signal detected by the detecting portions and a conducting portion which connects the plurality of detecting portions with one another and with the external output portion, all these portions being provided between the seating side outer surface of the pad member for a vehicle seat which is provided with a recessed groove in which a wire is embedded to fix a skin member and the skin member installed in the pad member to cover the seating side outer surface thereof. The flexible film shaped seat occupancy sensor is further featured that the conducting portion includes an inserting portion inserted into a through-hole provided in the recessed groove and penetrating through the pad member to a back side thereof, a first bending portion bent to be in contact with the seating side outer surface and arranged in a traverse direction with respect to the recessed groove and a second bending portion bent to be in contact with the seating side outer surface and arranged in a direction opposite to the direction of the first bending portion across the recessed groove. The seat occupancy sensor is further featured that the external output portion is provided at a tip end portion of the inserting portion and that the detecting portion includes a first detecting portion connected to the first bending portion and a second detecting portion connected to the second bending portion.

According to the feature of the invention associated with claim 2, in claim 1, the conducting portion includes a base end conducting portion projecting from a first detecting portion side of the inserting portion at a right angle and connected continuously to the second bending portion, wherein the base end conducting portion is accommodated in the recessed groove and supported thereby along in the recessed groove when the inserting portion is inserted into the through-hole.

According to another feature of the invention associated with claim 3, in claim 1 or 2, the inserting portion is supported by an elastic member formed to be of similar shape with the through-hole and inserted into the through-hole.

According to still another feature of the invention associated with claim 4, the flexible film shaped seat occupancy sensor includes a plurality of detecting portions for detecting a load information to a pad member by being in contact with a seating side outer surface of the pad member, an external output portion for outputting a load signal detected by the detecting portions and a conducting portion which connects the plurality of detecting portions with one another and with the external output portion, all these portions being provided between the seating side outer surface of the pad member for a vehicle seat which is provided with a recessed groove in which a wire is embedded to fix a skin member and the skin member installed in the pad member to cover the seating side outer surface thereof. The flexible film shaped seat occupancy sensor is further featured that the conducting portion includes an inserting portion inserted into a through-hole provided in a seating load applied area of the pad member and penetrating through the pad member to a back side thereof and the seat occupancy sensor is further featured that the external output portion is provided at a tip end portion of the inserting portion and that the inserting portion is supported by an elastic member formed to be of similar shape with the through-hole and inserted into the through-hole.

### EFFECTS OF THE INVENTION

According to the invention of claim 1, two detecting portions are provided in the vehicle seat pad member oppositely to each other across the recessed groove and the external output portion provided at the tip end portion of the inserting portion is inserted into the through-hole provided in the recessed groove and is arranged at the back side of the pad member. It is necessary for a detecting portion which detects the load to be provided around the hip point where the load of the occupant of the seat is applied. On the other hand the recessed groove is usually provided around the hip portion to have the occupant seated comfortably. As in a conventional manner, if the detecting portion is provided around the hip portion and the external output portion is provided at the back side of the pad member by wiring the conducting portion passing through a through-hole provided at the rearward of the seat cushion or over through the rear end of the seat cushion, the length of the conducting portion between the detecting portion and the external output portion becomes longer.

According to the invention, the first and the second detecting portions are provided oppositely to each other across the recessed groove located at the hip point area and at the same time, the inserting portion on which tip end portion the external output portion is provided is inserted into the through-hole provided in the recessed groove and is arranged at the back side of the pad member. This can shorten the length of the conducting portion between the detecting portion and the external output portion as minimum as possible. According to this structure, the entire product can be minimized in size and improvement in yield rate and reduction in cost can be expected.

Further, when an occupant of the vehicle is seated, the inserting portion receives the downward force in response to the compression deformation of the pad member by the load of the hip of the occupant. Thus the inserting portion can be moved downward to the back side of the through-hole by the downward force to avoid breakage of the conducting portion caused by deformation of the recessed groove. Accordingly, a disconnection of the conducting portion provided in the recessed groove by bending upon seating of the occupant can be prevented.

According to the invention of claim 2, the conducting portion is provided with a base end conducting portion projecting from the first detecting portion side of the inserting portion and connected continuously to the second bending portion. The base end conducting portion is provided at a right angle relative to the inserting portion and therefore, when the inserting portion is inserted into the through-hole, the inserting portion is well fitted to and accommodated in the inside of the recessed groove which extends at a right angle relative to the through-hole. Thus, the first detecting portion connected to the first bending portion and the second detecting portion connected to the second bending portion would not be deviated from the predetermined detecting positions on the pad member to highly accurately detect the load thereon.

According to the invention of claim 3, since an elastic member is inserted into the through-hole provided in the recessed groove and the shape of the elastic member is formed to be of similar shape with the through-hole and accordingly, when the occupant is seated on the seat cushion, the recessed groove in which the through-hole is provided would not be depressingly deformed by the concentration of stress thereon. Thus, a highly accurate detection can be achieved at the area around the recessed groove and the occupant would not feel any different feeling which may be generated by the load relief or load shifting.

Further, even when the pad member is compressed and deformed by the weight of the hip of the occupant, the deformation amount can be decreased at the peripheral area of the through-hole by the elastic member inserted into the through-hole. Thus the bending of the conducting portion due to deformation of the recessed groove and the through-hole can be restricted. Accordingly, a disconnection of the conducting portion provided in the recessed groove by bending upon seating of the occupant can be prevented.

According to the invention of claim 4, since an elastic member is inserted into the through-hole provided in the recessed groove and the shape of the elastic member is formed to be of similar shape with the through-hole. In a conventional structure, the concentration of stress occurs due to the load applied to the through-hole area when the occupant is seated on the seat and the peripheral area of the through-hole is deformed and depressed to relieve the load. Accordingly it was difficult to accurately detect the load at the detecting portion provided around the through-hole area. However, according to the invention, an elastic member is inserted into the through-hole which shape is similar to the shape of the through-hole and accordingly, even the occupant of the vehicle is seated on the seat, since the repulsion force at the outer surface of the hole and the peripheral area of the through-hole and the other surface area of the pad member are equally generated not to generate stress concentration around the through-hole area, a large deformation can be restricted to detect the load with a highly accurate manner by the detecting portion provided around the peripheral area of the through-hole. Further, the occupant would not feel any different feeling which may be generated by the load relief or load shifting.

### BRIEF EXPLANATION OF ATTACHED DRAWINGS

[Fig.1] Fig.1 is a view illustrating the seat occupancy sensor according to the invention arranged on a vehicle seat cushion;
[Fig.2] Fig.2 shows a plane view of the seat occupancy sensor arranged on a pad member;
[Fig.3] Fig.3 is a plane view of the seat occupancy sensor;
[Fig.4] Fig.4 is a perspective view of the seat occupancy sensor under the first and the second bending portions being bent preparing for assembling into the pad member;
[Fig.5] Fig.5 is a cross section view of the seat occupancy sensor under the state that the inserting portion is inserted into the through-hole provided in the recessed groove and the detecting portion is arranged across the recessed groove;
[Fig.6] Fig.6 is a partially enlarged view of the first film of the detecting portion;
[Fig.7] Fig.7 is a partially enlarged view of the partition member of the detecting portion;
[Fig.8] Fig.8 is an enlarged view of a portion of the second film of the detecting portion;
[Fig.9] Fig.9 is a cross sectional view of the pressure sensitive switch;
[Fig.10] Fig.10 is a partially enlarged perspective view of the seat occupancy sensor under the first and the second bending portions being bent preparing for assembling into the pad member;
[Fig.11] Fig.11 is a view similar to Fig.10, but showing the state that the occupant of the vehicle is seated;
[Fig.12] Fig.12 is a view showing the state that the inserting portion and the elastic member are held in the through-hole according to a second embodiment of the invention;
[Fig.13] Fig.13 is a view similar to Fig.12, but showing the state that the occupant of the vehicle is seated;
[Fig.14] Fig.14 is a view showing the state that the inserting portion and the elastic member of the seat occupancy sensor are held in the through-hole provided in the recessed groove according to a third embodiment of the invention;
[Fig.15] Fig.i 5 is a cross section view of the elastic member of another example;
[Fig.16] Fig.16 is a cross section view of the elastic member of further another example;
[Fig.17] Fig.17 is a seat occupancy sensor of a conventional type which is provided on the seat cushion over through the rear end thereof;
[Fig.18] Fig.18 is a seat occupancy sensor of another conventional type which is arranged in the through-hole provided at a back side of the seat cushion; and
[Fig.19] Fig.19 is a view similar to Fig.18, but showing the state that the occupant of the vehicle is seated.

### THE EMBODIMENTS FOR IMPLEMENTING THE INVENTION

### (First Embodiment)

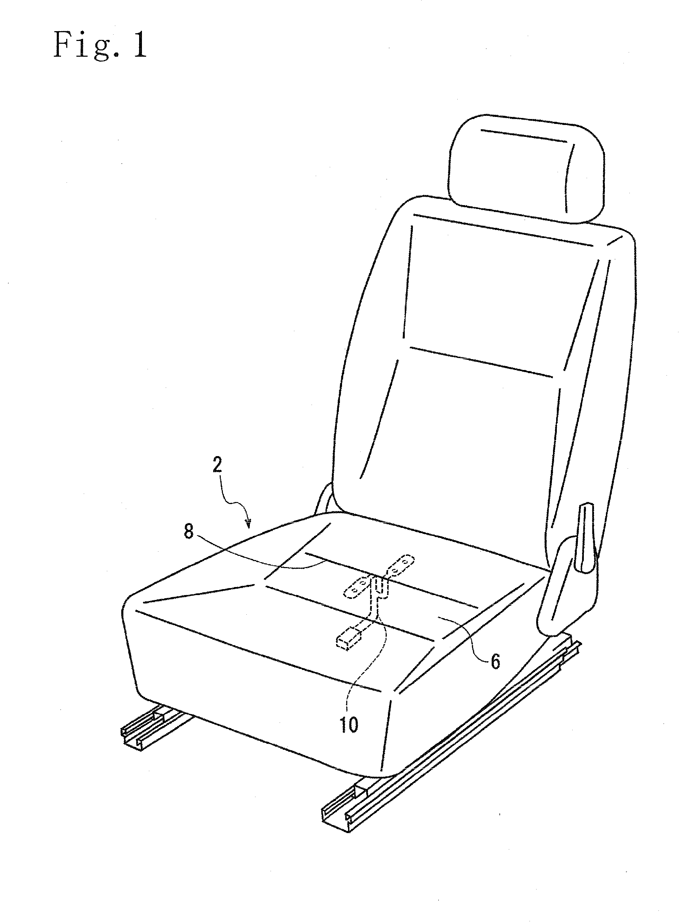

The first embodiment of the seat occupancy sensor implemented on a vehicle seat according to the invention will be explained with reference to the attached drawings. Fig.1 illustrates a perspective view showing a seat cushion 2 of the vehicle seat for single use.

The seat cushion 2 as viewed in Fig.1, is formed by a pad member 4 formed by a urethane material or the like and a skin member 6 formed by a cloth material (or a leather material, etc.) which covers the seating side outer surface of the pad member 4. A recessed groove 8 is provided on the upper surface of the pad member 4 of the seat cushion 2. The recessed groove 8 is caved in the upper surface of the pad member 4 and extends in a right/left direction. An insertion hole (through-hole) 12 is formed at the pad member 4 penetrating through from the upper surface to the lower surface of the pad member 4 at a middle portion of the pad where the recessed groove 8 is provided. A wire 9 is provided within the pad member 4 under the recessed groove 8 for hooking the skin member 6 (See Fig.1) by a hook (not shown). The wire 9 extends in a right/left direction relative to the seat cushion 2. According to this embodiment, the wire 9 is provided bypassing the area where the through-hole 12 is provided, deviating in a horizontal direction.

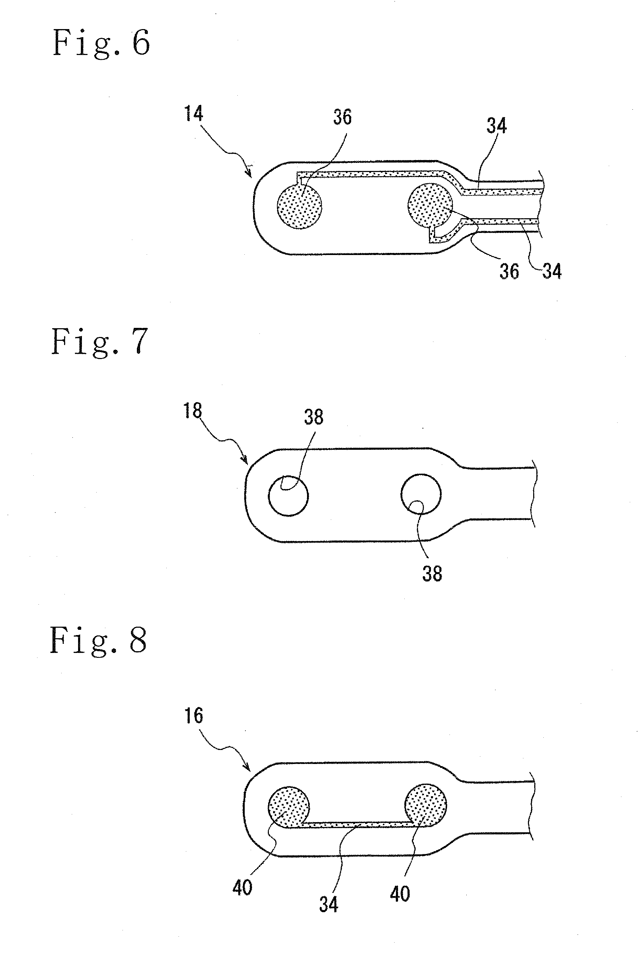

The seat occupancy sensor 10 is formed as shown in Figs. 6 through 8, mainly by a membrane switch 19 which is formed by overlapping a pair of first and second films 14 and 16 interposing an insulating spacer 18 which functions as a partition member.

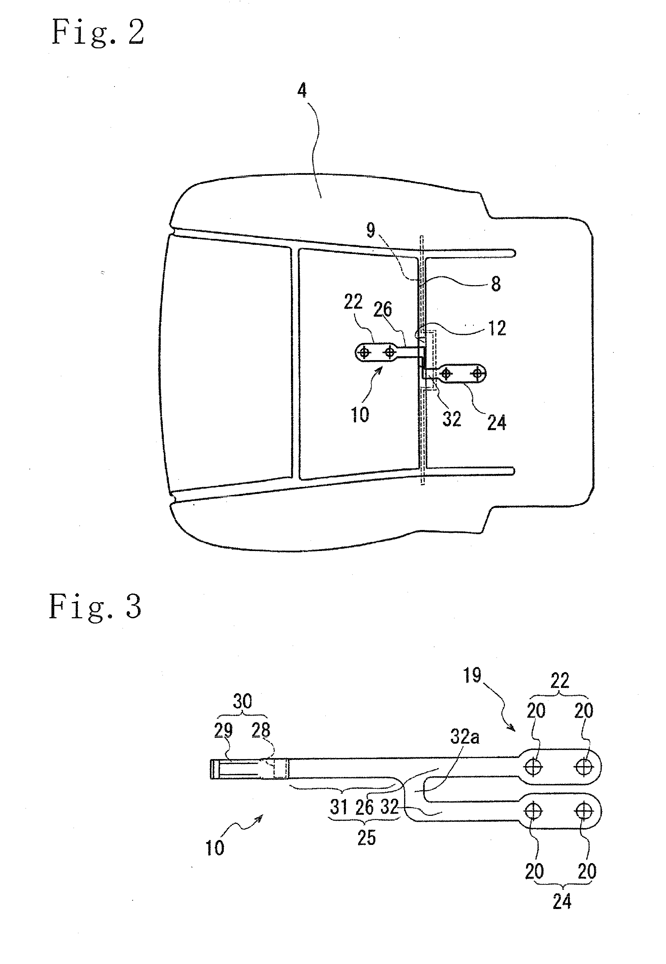

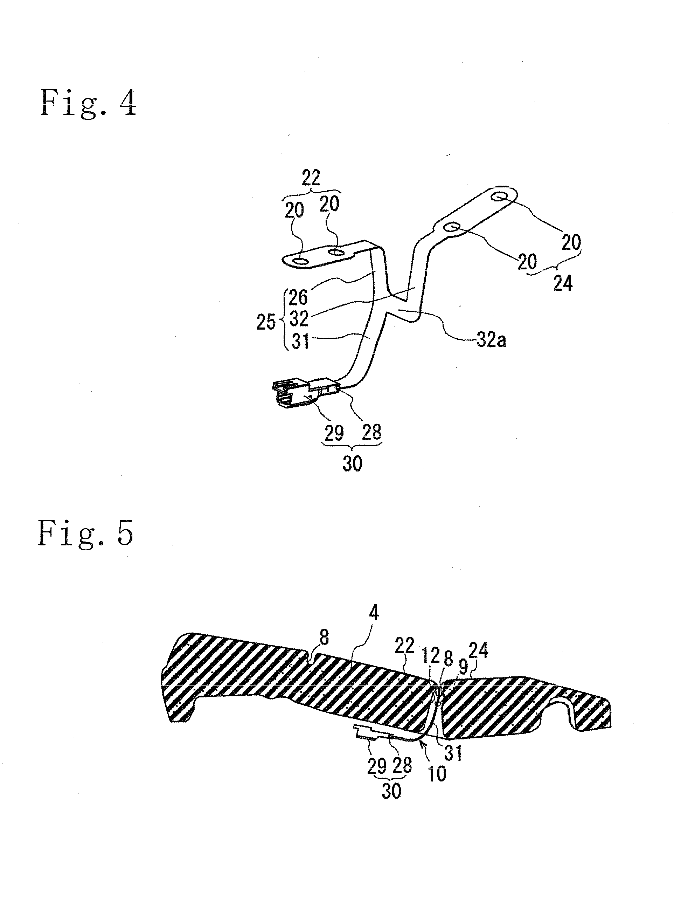

The membrane switch 19 is formed by an elastic film as viewed in Fig.3. The membrane switch 19 is provided with two pairs (four) of pressure sensitive switches 20, 20, having a first detecting portion 22 and a second detecting portion 24. The first and the second detecting portions 22 and 24, the first detecting portion 22 and an external output portion (later described in detail) and the second detecting portion 24 and the external output portion are electrically connected by a conducting portion 25. The conducting portion 25 is bent to form a first bending portion 26 when assembled into the pad member 4. The first detecting portion 22 is provided at the tip end side of the first bending portion 26. An inserting portion 31 is formed on the conducting portion 25 at a lower side than the position of the first bending portion 26 as viewed in Fig.4. The tip end portion of the inserting portion 31 is connected to the external output portion 28. The external output portion 28 outputs the load detected by the pressure sensitive switches 20 and is formed with an output electrode. A connector portion 30 is formed by the external output portion 28 and a connector 29 connected to the external output portion 28. The connector portion 230 is connected to an ECU (Electronic Control Unit; not shown) which judges the occupancy state of the occupant of the seat.

A base end conducting portion 32a is provided at the first detecting portion 22 side of the inserting portion 31 and projecting therefrom at a right angle in a short direction and a second bending portion 32 is provided which continues from the base end conducting portion 32 and extends therefrom further at a right angle. The second detecting portion 24 is provided at the tip end side portion of the second bending portion 32. The second bending portion 32 is bent to be in an opposite direction with the first bending portion 26 across the recessed groove 8 when assembling on the seating side outer surface of the pad member 4.

The first film 14 is formed by PEN (polyethylene naphthalate) material, the thickness thereof being 0.1 mm and as shown in Fig.6. A pair of switch wires 34 is printed on the film in parallel with each other and connected to positive and negative electrodes of the connector portion 30, respectively at the first and the second detecting portions 22 and 24. The area of the first film 14 corresponding to location of the pressure sensitive switches 20 is widened and on this widened area a pair of circular contacted/separated portions 36 which is connected to the switch wires 34, respectively is printed.

The insulating spacer 18 is formed by PEN (polyethylene naphthalate) material, the thickness thereof being 0.15mm and as shown in Fig. 7. A pair of circular penetrating holes 38 is provided at the portions corresponding to the circular contacted/separated portions 36 which are penetrating through the spacer 18.

The second film 16 is formed similar to the first film 14 in shape as shown in Fig. 8 and a pair of contacting/separating portions 40 is printed on the film 16 at the portions corresponding to the circular contacted/separated portions 36.

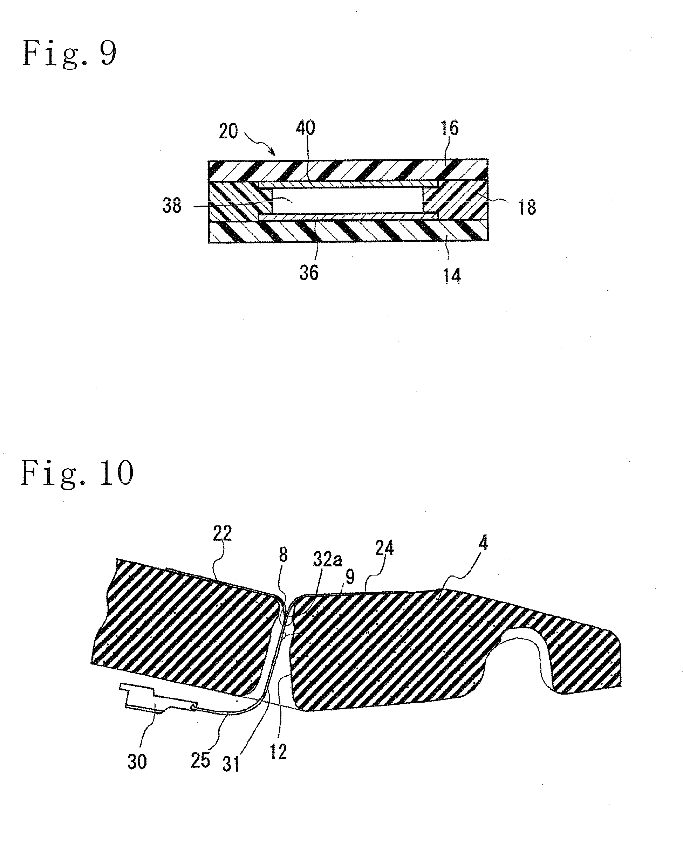

The first and the second films 14 and 16 and the insulating spacer 18 are formed to be overlapped and adhered to one another by means of adhesive agent or by ultrasonic welding process thereby to form the pressure sensitive switch 20. As shown in Fig. 9, a space is formed by each penetrating holes 38 by adhering and overlapping the films 14 and 16 and the insulating spacer 18 so that the contacted/separated portions 36 of the first film 14 are contacted with or separated from the contacting/separating portions 40 of the second film 16, respectively. The circular contacted/separated portions (lower side electrode) 36 provided on the first film 14 and the contacting/separating portions (upper side electrode) 40 provided on the second film 16 are oppositely and concentrically formed relative to the penetration holes 38 and when a load in a thickness direction is applied on the pressure sensitive switch 20, the contacted/separated portions 36 and the contacting/separating portions 40 are brought into contact thereby to turn the switch ON. By this switching contact, the electric current flowing therethrough can be detected. The first detecting portion 22 and the second detecting portion 24 are respectively formed by two pressure sensitive switches 20, 20 connected in series and the first and the second detecting portions 22 and 24 are connected to the switch wires 34 in parallel. When the two pressure sensitive switches 20, 20 connected in series of each detecting portion 22 and 24 are turned ON, the electric current flows through the respective detecting portions 22 and 24.

When the membrane switch 19 is assembled to the pad member 4, as shown in Fig. 4, the first and the second detecting portions 22 and 24 are positioned to oppose to each other across the recessed groove 8 and the first bending portion 26 and the second bending portion 32 are bent at a right angle in the opposite direction to each other. Thus arranged switch 19 is assembled onto the outer surface of the pad member 4 (See Fig. 2). The inserting portion 31 is inserted into the through-hole 12 provided in the recessed groove 8 of the pad member 4 as shown in Fig. 5 and then the connector portion 30 is fixed to the seat frame (not shown) at the back side surface of the seat cushion 2.

The seat occupancy sensor 10 thus structured is assembled to the pad member 4 of the seat cushion 2 as follows: as shown in Fig. 10, the inserting portion 31 of the membrane switch 19 is inserted into the through-hole 12 provided in the recessed groove 8 and the connector portion 30 is fixed at the back side surface of the seat cushion 2. Then the first and the second detecting portions 22 and 24 are disposed in opposite direction to each other across the recessed groove 8.

After the inserting portion 31 is inserted into the through-hole 12 and the first and the second detecting portions 22 and 24 are arranged oppositely across the recessed groove 8, the base end conducting portion 32a projecting at right angle relative to the inserting portion 31 is accommodated in the recessed groove 8 and is well fitted into the recessed groove 8.

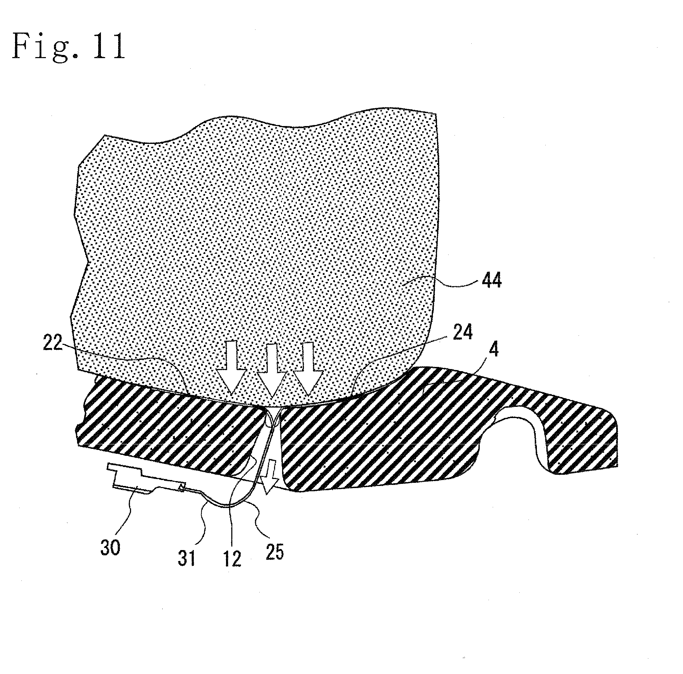

Further, when the occupant of the vehicle is seated on the seat, as shown in Fig. 11, the membrane switch 19 is pressed downward by the hip of the occupant but the inserting portion 31 of the conducting portion 25 inserted into the through-hole 12 can be freed along the side wall of the through-hole. This can prevent the conducting portion 25 from breakage due to the load.

The operation of the seat occupancy sensor 10 will be explained hereinafter. When both of the pressure sensitive switches 20, 20 of the first detecting portion 22 or both of the pressure sensitive switches 20, 20 of the second detecting portion 24 are simultaneously turned ON (including the case that all of the pressure sensitive switches are turned ON), the electric current flows through the switch wires 34 to output a seat occupied detecting signal. This can prevent erroneous detection outputted in case of a package having an area of contact with the seat surface being placed on the seat cushion. Upon receipt of the seat occupied detection signal, the ECU judges that the load on the seat cushion 2 is a human, it enable the operation of an airbag device or warns of non-wearing of a seatbelt.

According to the seat occupancy sensor 10 thus structured, the first and the second detecting portions 22 and 24 are arranged oppositely to each other across the recessed groove 8 and the external output portion 28 provided at the tip end portion of the inserting portion 31 is inserted into the through-hole 12 provided in the recessed groove 8 and fixed at the back side of the pad member 4.

It is necessary for the detecting portions 22 and 24 to be located around the hip point where the load of the occupant is concentrated. On the other hand, it is preferable to provide the recessed groove 8 at the hip point area, considering the comfortable seating feeling for the seat occupant. If, as a conventional device, the detecting portion is provided at the hip point area and the conducting portion is extended through a penetration hole provided at the rearward of the seat cushion or through the rear end of the seat cushion 2 to provide an external output portion connected thereto at the backside of the seat cushion. This may elongate the length of the conducting portion between the detecting portion and the external output portion.

According to the embodiment of the invention, the first and the second detecting portions 22 and 24 are positioned at the hip point area oppositely arranged across the recessed groove and at the same time, the inserting portion 31, tip end of which the external output portion is provided is inserted into the through-hole 12 provided at the recessed groove 8 and is fixed at the back side of the pad member 4. This can shorten the length of the conducting portion 25 between the detecting portions 22 and 24 and the external output portion 28.

Further, as shown in Fig. 11, the inserting portion 31 receives a downward force which is generated by the compression deformation of the pad member 4 by the load of the hip of the occupant when the occupant is seated on the seat cushion. The inserting portion 31 is then freed downwardly along the side wall of the through-hole 12 not to break the conducting portion 25 by the deformation of the recessed groove 8. Thus, a dis-connection of the switch wires 34 due to a bending of the conducting portion 25 provided in the recessed groove 8 upon seating of the occupant of the vehicle can be prevented.

### (Second Embodiment)

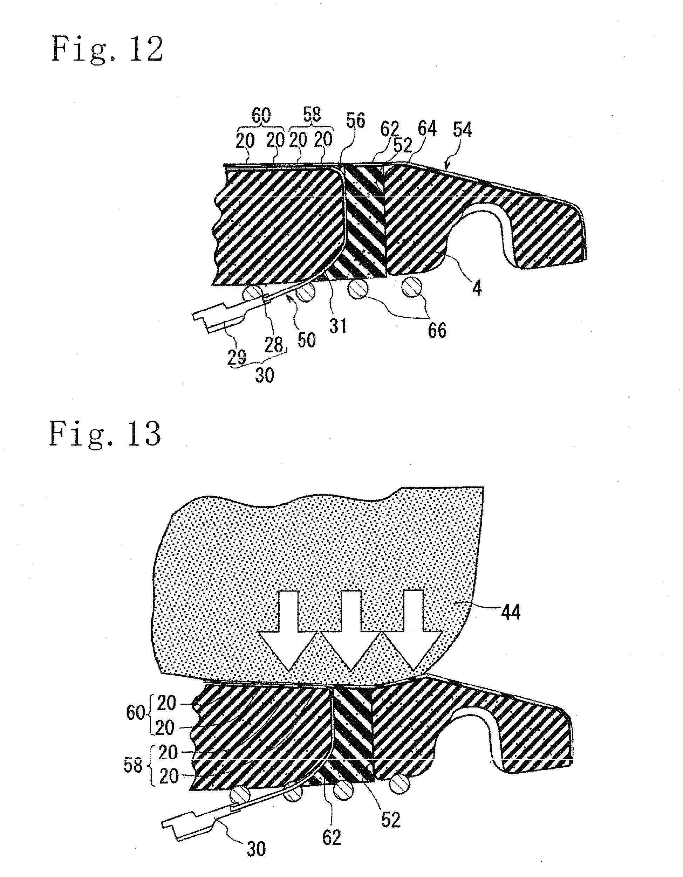

Next, the seat occupancy sensor assembled to the vehicle seat according to the second embodiment will be explained hereinafter with reference to Fig. 12.

According to the seat occupancy sensor 50 of the second embodiment, the following structures are different from those of the first embodiment: the through-hole 52 is provided at a portion of the seat cushion 54 further rearward from the area where the recessed groove (not shown) is provided; the membrane switch 56 is linear band shaped and the first and the second detecting portions 58 and 60 are arranged in series; and the elastic member 62 formed by the same material with the pad member 4 (such as for example, urethane material) and having similar or same shape with the through-hole 52 is inserted into the through-hole 52 and held thereby. These structures are different from those of the first embodiment and the rest of the structures are the same with the first embodiment and the explanation thereof will be omitted.

It is noted that in order to have the elastic member 62 to be well fitted into the recessed groove, an S-shape spring 66 is illustrated in Figs. 12 and 13 which is transversely supported by the skin member 64 and a seat bottom frame (not shown).

According to thus structured seat occupancy sensor 50, the elastic member 62 is inserted into the through-hole 52 and the shape thereof is similar to the through-hole 52. Conventionally, when the occupant is seated on the seat, the stress is concentrated on the area of the through-hole 52 due to the load of the occupant. Thus, the peripheral area of the through-hole 52 is depressed sand deformed downward to free the load to be detected. This can prevent a correct measurement of the load at the detecting portion positioned around the through-hole 52. However, according to the embodiment of the invention, since the elastic member 62 which has the shape similar to the shape of the through-hole 52 is inserted into the through-hole 52 and supported thereby, even when the occupant is seated on the seat cushion, the detecting portions 58 and 60 of the seat occupancy sensor 50 detect the load under the state that the detecting portions are placed on a flat surface formed by the pad member 4 and the elastic member 62 (the state that the reaction force from the pad member 4 and the elastic member 62 against the load is equal), as shown in Fig. 13. Therefore, even the detecting portions 58 and 60 arranged around the peripheral area of the through-hole 52 on which the load is applied can detect the load with high accuracy. Further, any different feeling by an occupant of the seat caused by freeing of load can be prevented.

### (Third Embodiment)

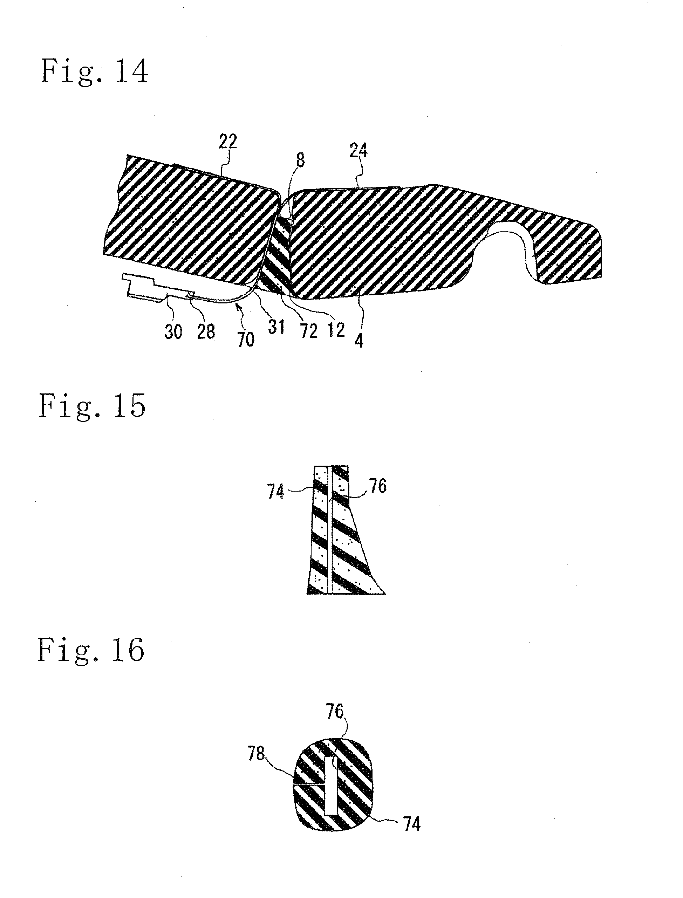

Next, the seat occupancy sensor assembled to the vehicle seat according to the third embodiment will be explained hereinafter with reference to Fig. 14.

In this embodiment, the structure of the seat occupancy sensor 70 is different from the first embodiment in the structure of the elastic member 72 which is formed by the same material with the pad member 4 and having the shape similar to the shape of the through-hole 12 formed in the recessed groove 8 and inserted into the through-hole and supported thereby. The other structures are the same or similar to those of the first embodiment and the detail explanation thereof will be omitted.

According to thus structured seat occupancy sensor 70, the elastic member 72 which shape is similar to the through-hole 12 provided in the recessed groove 8 is inserted into the through-hole 12. Accordingly, even when the occupant of the vehicle is seated on the seat cushion, the recessed groove area where the through-hole 12 is provided is not depressed and deformed downwardly due to the stress concentration caused by the load of the occupant. Even when the pad member 4 is compressed and deformed by the weight of the hip 44, the deformation amount is decreased by the elastic member 62 inserted into the through-hole 12. Thus, a highly accurate detection at the groove area can be achieved by the detecting portions 22 and 24 which are arranged around the periphery of the through-hole 12. Further, any different feeling by an occupant of the seat caused by freeing of load can be prevented.

It is noted that in this embodiment, the outer profile of the elastic member is shaped similar to the through-hole 12. However, it is not limited to this structure, but as shown in Figs. 15 and 16, the elastic member 74 can be formed with a slit groove 78 for inserting the inserting portion into a through-hole 76 through which the inserting portion (conducting portion) of the sensor is slidable inserted. According to this structure, even the sensor is moved downwardly by the load applied on the seat can be smoothly freed through the through-hole 76 to the back side of the cushion member. Therefore, the breakage of the conducting portion of the seat occupancy sensor due to the load applied thereon can be prevented.

The material same to the pad member is used for the elastic member according to the embodiment of the invention, but it is not limited to this material selection and different material can be used for the elastic member depending on the shape of the through-hole, the size of the through-hole or the like.

Further, according to the embodiments, the first and the second detecting portions of the seat occupancy sensor are formed by each pair of pressure sensitive switches. But the invention is not limited to this structure and one pressure sensitive switch or more than two switches are used to form the detecting portions. Further, the conducting portion connects the plurality of detecting portions with one another and also connects the detecting portions and the external output portion. However, the invention is not limited to this connection structure, and the invention includes the structure that only the detecting portions and the external output portion may be electrically connected.

Further, the membrane switch includes circular contacting/separating portions and the contacted/separated portions for switching operation. The invention is not limited to this structure and the following structure for example may be included wherein the switch includes contacted/separated portions which are printed on the first film and formed by separately positioned semi-circular shaped and axially symmetrical conducting materials and circularly formed contacting/separating portions formed by a conductive material oppositely positioned to the contacted/separated portions and printed on the second film to form a switch by contacting or separating. In this case when one pressure sensitive switch portion turns ON, the electric current flows through the switch wire to output a seat occupied detection signal.

The embodiments of the invention are explained hitherto, however, the invention is not limited to the explained embodiments but other modifications or alterations of the embodiments can be included in the invention within the subject matter of the invention.

### INDUSTRIAL APPLICABILITY OF THE INVENTION

The seat occupancy sensor according to the invention is applicable to a detection of seating load by the seat occupancy sensor arranged on the vehicle seat having a transverse recessed groove thereon.

### EXPLANATION OF REFERENCE NUMERALS

In the drawings:
2: seat cushion, 4: pad member, 8: recessed groove, 10: seat occupancy sensor, 12: through-hole, 19: membrane switch, 22: first detecting portion, 24: second detecting portion, 25: conducting portion, 26: first bending portion, 28: external output portion, 30: connector portion, 31: inserting portion, 32: second bending portion, 32a: base end conducting portion, 50: seat occupancy sensor, 52: through-hole, 54: seat cushion, 56: membrane switch, 58: first detecting portion, 60: second detecting portion, 62: elastic member, 70: seat occupancy sensor, 72: elastic member, 74: elastic member.

## Claims

1. A flexible film shaped seat occupancy sensor including a plurality of detecting portions for detecting a load information of a pad member by being in contact with a seating side outer surface of the pad member;
an external output portion for outputting a load signal detected by the detecting portions; and
a conducting portion which connects the plurality of detecting portions with one another and with the external output portion, wherein the detecting portions, the external output portion and the conducting portion are provided between the seating side outer surface of the pad member for a vehicle seat which is provided with a depressed recessed groove in which a wire is embedded to fix a skin member and the skin member installed in the pad member so that the seating side outer surface is covered thereby, wherein
the conducting portion includes:
an inserting portion inserted into a through-hole provided in the recessed groove and penetrating through the pad member to a back side thereof;
a first bending portion bent to be in contact with the seating side outer surface and arranged in a traverse direction with respect to the recessed groove; and
a second bending portion bent to be in contact with the seating side outer surface and arranged in a direction opposite to the direction of the first bending portion across the recessed groove, that the external output portion is provided at a tip end portion of the inserting portion, and that the detecting portion includes a first detecting portion connected to the first bending portion and
a second detecting portion connected to the second bending portion.

2. The seat occupancy sensor according to claim 1, wherein the conducting portion includes a base end conducting portion projecting from a first detecting portion side of the inserting portion at a right angle and connected continuously to the second bending portion, wherein the base end conducting portion is accommodated in the recessed groove and supported thereby along in the recessed groove when the inserting portion is inserted into the through-hole.

3. The seat occupancy sensor according to claim 1 or 2, wherein the inserting portion is supported by an elastic member formed to be of similar shape with the through-hole and inserted into the through-hole.

4. A flexible film shaped seat occupancy sensor including
a plurality of detecting portions for detecting a load information of a pad member by being in contact with a seating side outer surface of the pad member;
an external output portion for outputting a load signal detected by the detecting portions; and
a conducting portion which connects the plurality of detecting portions with one another and with the external output portion, the detecting portions, the conducting portion and the external output portion being provided between the seating side outer surface of the pad member for a vehicle seat which is provided with a depressed recessed groove in which a wire is embedded to fix a skin member and the skin member installed in the pad member so that the seating side outer surface is covered thereby,
wherein
the conducting portion includes an inserting portion inserted into a through-hole provided in a seating load applied area of the pad member and penetrating through the pad member to a back side thereof;
and that
the external output portion is provided at a tip end portion of the inserting portion and the inserting portion is formed to be of similar shape with the through-hole and is supported by an elastic member inserted into the through-hole.
